# EUROPÄISCHE PATENTSCHRIFT

(11) **EP 1 731 256 B1**
(45) Veröffentlichungstag und Bekanntmachung des Hinweises auf die Patenterteilung: **28.10.2009**
(21) Anmeldenummer: 06010569.9
(22) Anmeldetag: 23.05.2006
(51) Int. Cl.: B23K 26/42, B23K 37/04, B25B 11/00, B25B 1/24, B23Q 1/03

(54) **Laser-Bearbeitungstisch mit bewegbaren Werkstückauflagen**
Laser processing table with movable workpiece supporting elements
Table de travail laser avec des éléments de support de pièces déplaçables

(30) Priorität: 30.05.2005 DE 102005025889
(43) Veröffentlichungstag der Anmeldung: 13.12.2006
(73) Patentinhaber: Dietle, Hans, 72221 Haiterbach (DE)
(72) Erfinder: Dietle, Hans, 72221 Haiterbach (DE)
(74) Vertreter: Lindner, Michael

(56) Entgegenhaltungen:
- US-B1- 6 202 275
- PATENT ABSTRACTS OF JAPAN Bd. 013, Nr. 020 (M-785), 18. Januar 1989 (1989-01-18) -& JP 63 230293 A (YAMAZAKI MAZAK CORP), 26. September 1988 (1988-09-26)
- PATENT ABSTRACTS OF JAPAN Bd. 2000, Nr. 23, 10. Februar 2001 (2001-02-10) -& JP 2001 170790 A (MITSUBISHI ELECTRIC CORP), 26. Juni 2001 (2001-06-26)
- PATENT ABSTRACTS OF JAPAN Bd. 008, Nr. 253 (M-339), 20. November 1984 (1984-11-20) -& JP 59 127988 A (ASAHI OPTICAL CO LTD), 23. Juli 1984 (1984-07-23)
- PATENT ABSTRACTS OF JAPAN Bd. 012, Nr. 182 (M-702), 27. Mai 1988 (1988-05-27) -& JP 62 292293 A (MITSUBISHI ELECTRIC CORP), 18. Dezember 1987 (1987-12-18)

## Beschreibung

Die vorliegende Erfindung betrifft einen Laser-Bearbeitungstisch zur Abstützung eines per Laser zu bearbeitenden, vorzugsweise plattenförmigen Werkstücks gemäß dem Oberbegriff des Anspruchs 1 (siehe, z.B., JP 63/230 293)

Laser-Bearbeitungstische sind bspw. aus folgenden Veröffentlichungen bekannt: Patent Abstract of Japan Bd. 013, Nr. 020 (M-785), 18. Januar 1989, oder Patent Abstract of Japan Bd. 008, Nr. 253 (M-339), 20. November 1984, oder Patent Abstract of Japan Bd. 012, Nr. 182 (M-702), 27. Mai 1988.

Allgemein werden Laser-Bearbeitungstische in Laser-Bearbeitungsmaschinen eingesetzt, um das Werkstück während des Bearbeitungsschritts sicher abzustützen. Üblicherweise sind die Werkstückauflagen als längliche Rechen ausgebildet, auf deren Spitzen das Werkstück aufliegt. Die länglichen Rechen sind gleichmäßig beabstandet und parallel zueinander angeordnet, derart, dass die Spitzen der Rechen in der Bearbeitungsebene enden und dort das Werkstück abstützen können.

Insbesondere beim Laserschneiden von auf den Werkstückauflagen aufliegenden Werkstücken werden die im Schneidbereich des Lasers liegenden Spitzen der Rechen stark beansprucht, sei es durch den Laserstrahl direkt oder durch heiße Abfälle, die beim Schneiden entstehen und nach unten fallen.

Diese Beanspruchung der einzelnen Rechen macht es erforderlich, dass die Werkstückauflagen in regelmäßigen Abständen ausgewechselt werden. Dies ist nachteilig, da einerseits Kosten entstehen und andererseits die Laser-Bearbeitungsmaschine während dieser Zeit stillsteht.

Ein weiterer noch schwerer ins Gewicht fallender Nachteil bisheriger Lösungen besteht darin, dass teilweise Werkstücke an den spitzen Enden der Rechen festschweißen. Das führt einerseits dazu, dass die Laser-Bearbeitungsmaschine abgeschaltet werden muss, um das Werkstück zu entfernen. Die Folge sind erhöhte Stillstandszeiten. Andererseits können diese Werkstücke nicht mehr verwendet werden, was zu einer erhöhten Ausschussrate führt.

Vor diesem Hintergrund besteht die Aufgabe der vorliegenden Erfindung darin, einen Laser-Bearbeitungstisch der vorgenannten Art so weiterzubilden, dass er die vorgenannten Nachteile nicht mehr aufweist.

Ein Laserbearbeitungstisch gemäß der Erfindung ist im Anspruch 1 definiert.

Das heißt mit anderen Worten, dass die einzelnen Werkstückauflagen von dem Werkstück weg nach unten bewegbar sind, um auf diese Weise aus dem direkten Einflussbereich des schneidenden Lasers zu gelangen. Einige Zentimeter beispielsweise reichen aus, um eine Schädigung durch direkte Lasereinstrahlung zu vermeiden, zumindest jedoch zu vermindern.

Da jede Werkstückauflage entsprechend bewegbar ist, können die außerhalb des Schneidbereichs liegenden Werkstückauflagen in ihrer Abstützposition verbleiben, so dass weiterhin eine sichere Abstützung des Werkstücks gewährleistet ist. Letztlich reicht es auch, nur eine im unmittelbaren Schneidbereich des Lasers befindliche Werkstückauflage beim Schneiden nach unten wegzubewegen.

Der Vorteil dieser erfindungsgemäßen Lösung ist darin zu sehen, dass ein Verschweißen des Werkstücks mit der Werkstückauflage nicht mehr auftritt. Damit lassen sich die Stillstandszeiten und die Ausschussrate deutlich verringern. Darüber hinaus steigt die Qualität der Werkstücke, da die Gefahr von Anhaftungen an den Werkstücken geringer ist.

Ein weiterer Vorteil dieser erfindungsgemäßen Lösung besteht unter anderem darin, dass die Lebensdauer der Werkstückauflagen deutlich gesteigert wird, so dass die Austauschzyklen deutlich verlängert werden können. Entsprechend kürzere Stillstandszeiten der Laser-Bearbeitungsvorrichtung sind damit realisierbar.

Zudem ist erfindungsgemäß jeder Werkstückauflage ein Abdeckmittel zugeordnet, das ausgebildet ist, um die Werkstückauflagen in ihrer Schutzposition gegenüber dem Laser zu schützen. Das Abdeckmittel umfasst einen Abschnitt, der schräg oder parallel zur Bearbeitungsebene verläuft und als Schutz gegenüber dem Laser dient. Bevorzugt ist jede Werkstückauflage derart bewegbar gehalten, dass sie - in der Schutzposition - unter dem Schutzabschnitt des Abdeckmittels liegt.

Das heißt mit anderen Worten, dass der Laser-Bearbeitungstisch ein als "Dach" wirkendes Abdeckmittel für jede Werkstückauflage besitzt, unter dem sich die jeweilige Werkstückauflage in der Schutzposition "verstecken" kann. In der Schutzposition schirmt also das Abdeckmittel die Auflagefläche der jeweiligen Werkstückauflage gegenüber dem Laser ab, so dass weder direkte Laserstrahlung noch beim Schneiden entstehender nach unten wegfallender Abfall die Werkstückauflage treffen kann. Das jeweilige Abdeckmittel sorgt dafür, dass Abfall an der Werkstückauflage vorbeigeführt wird und hält von oben kommende Laserstrahlung wirkungsvoll ab.

Der Vorteil dieser Maßnahmen liegt insbesondere darin, dass die Lebensdauer der Werkstückauflagen jeweils deutlich erhöht werden kann, so dass einerseits Reinigungsarbeit eingespart werden kann und andererseits die Ausfallzeiten zur Durchführung eines Werkstückauflagenwechsels verringert werden können.

In einer bevorzugten Weiterbildung sind die Werkstückauflagen im Wesentlichen senkrecht zur Bearbeitungsebene bewegbar gehalten.

Diese Maßnahme hat den Vorteil, dass eine einfache robuste Mechanik zur Führung und Bewegung der Werkstückauflagen möglich wird.

In einer bevorzugten Weiterbildung ist jeder Werkstückauflage zumindest ein Aktuator zugeordnet, der die Werkstückauflage in die Schutzposition und zurück in die Abstützposition bringt. Vorzugsweise ist jeder Werkstückauflage an jedem Längsende jeweils ein Aktuator zugeordnet, wobei jeder Aktuator vorzugsweise einen pneumatisch angetriebenen Kolben umfasst und über ein elektrisch ansteuerbares Ventil steuerbar ist.

Die vorgenannten Maßnahmen haben sich in der Praxis als besonders vorteilhaft herausgestellt. Insbesondere die Verwendung von pneumatischen Aktuatoren ermöglicht eine schnell ansprechende einfach umzusetzende Bewegung der Werkstückauflage. Darüber hinaus sind die pneumatischen Aktuatoren sehr wartungsfreundlich, so dass der hierfür anfallende Wartungsaufwand vernachlässigbar bleibt.

In einer bevorzugten Weiterbildung ist jeder Werkstückauflage an jedem Längsende eine Kulissenführung zugeordnet, in der die jeweilige Werkstückauflage geführt ist und deren Bewegungsbahn bestimmt. Vorzugsweise weist die Kulissenführung einen ersten Führungsabschnitt auf, der im Wesentlichen senkrecht zur Bearbeitungsebene verläuft, und einen zweiten Führungsabschnitt, der quer zur Bearbeitungsebene verläuft, um die Werkstückauflage in die Schutzposition zu schwenken.

Diese Maßnahmen haben den Vorteil, dass eine senkrechte Bewegung mit anschließender Verschwenkung unter das Abdeckmittel konstruktiv einfach möglich wird.

In einer bevorzugten Weiterbildung ist eine Steuerung vorgesehen, die die Position des Lasers erfasst und abhängig davon die im Bereich des Lasers liegende Werkstückauflage in die Schutzposition bewegt. Vorzugsweise werden die im Bereich des Lasers liegenden Werkstückauflagen nicht bewegt, wenn der Laser zum Positionieren verfahren wird.

Die vorliegenden Maßnahmen haben den Vorteil, dass nur diejenigen Werkstückauflagen bewegt werden, die im unmittelbaren Wirkungsbereich des Lasers liegen, so dass eine sichere Werkstückauflage jederzeit gewährleistet ist. Darüber hinaus kann mit sehr hoher Geschwindigkeit positioniert werden, da in diesem Fall eine Bewegung der Werkstückauflagen nicht erfolgt.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand einer Ausführungsform unter Bezugnahme auf die beigefügten Zeichnungen näher beschrieben. Dabei zeigen:
- Figuren 1a, b: zwei perspektivische schematische Ansichten eines eines Beispiels eines Laser-Bearbeitungstisches, der nicht Gegenstand der Erfindung ist;
- Figur 1c: eine Draufsicht des in Figur 1a gezeigten Laser-Bearbeitungstisches;
- Figuren 2a, b: eine schematische Seitenansicht eines Teils des Laser-Bearbeitungstisches gemäß der Erfindung;
- Figur 3: eine schematische perspektivische Ansicht eines Teils des Laser-Bearbeitungstisches; und
- Figur 4: eine perspektivische schematische Darstellung eines Aktuators.

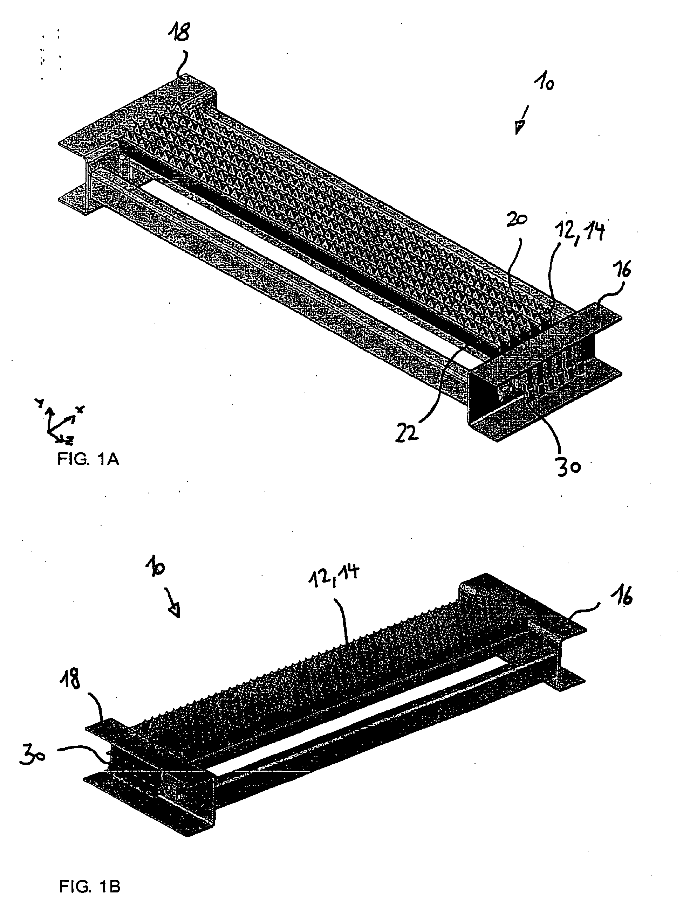

In den Figuren 1a bis c ist ein Laser-Bearbeitungstisch in drei unterschiedlichen Ansichten dargestellt und mit dem Bezugszeichen 10 gekennzeichnet, der nicht der Gegenstand der Erfindung ist. Aus Übersichtlichkeitsgründen ist der dargestellte Laser-Bearbeitungstisch hinsichtlich seiner Abmessungen stark reduziert und damit nicht maßstabsgetreu. Insbesondere ist die Erstreckung des Laser-Bearbeitungstisches 10 in X-Richtung normalerweise deutlich größer. Zur Erläuterung der vorliegenden Erfindung kommt es jedoch nicht auf die konkreten Abmessungen des Laser-Bearbeitungstisches 10 an.

Grundsätzlich werden derartige Laser-Bearbeitungstische 10 dazu benutzt, um ein mit Laser zu bearbeitendes Werkstück abzustützen. Bei dem Werkstück handelt es sich üblicherweise um eine Metallplatte, die per Laser geschnitten werden soll. Der Laser-Bearbeitungstisch 10 ist folglich Teil einer - nicht dargestellten - Laser-Bearbeitungsvorrichtung bzw. einem Laser-Bearbeitungszentrum.

Der in Figur 1a gezeigte Laser-Bearbeitungstisch 10 umfasst eine Vielzahl von Werkstückauflagen 12, die als längliche Rechenleisten 14 ausgebildet sind und sich in Z-Richtung von einer Seitenhalterung 16 zur gegenüberliegenden Seitenhalterung 18 erstrecken. Die beiden Seitenhalterungen 16, 18 sind Teil eines Tischrahmens, der in den Figuren nur teilweise dargestellt ist, und auf den nicht näher eingegangen werden soll.

In der in Figur 1a gezeigten Form dass Beispiels sind insgesamt sechs Werkstückauflagen 12 in X-Richtung gleichmäßig beabstandet zueinander angeordnet, wobei die Werkstückauflagen 12 parallel zueinander verlaufen.

Die Werkstückauflagen 12 besitzen jeweils eine Vielzahl von Spitzen 20, die insgesamt in einer Ebene liegen, und auf denen das zu bearbeitende Werkstück in der Bearbeitungsebene liegt.

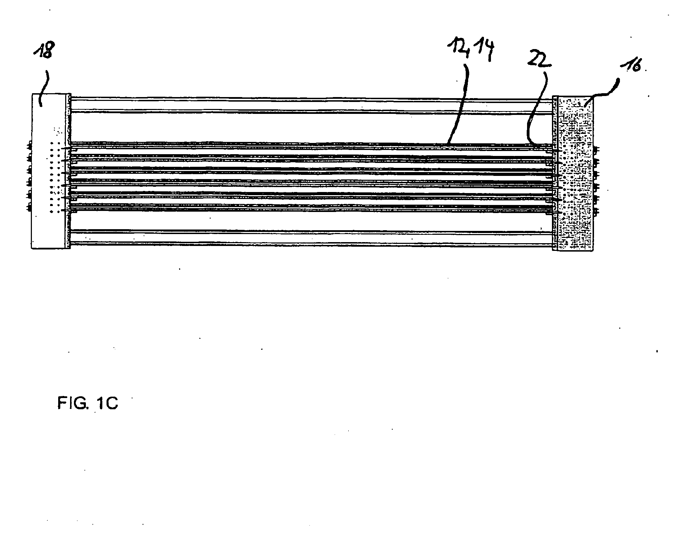

Aus Figur 1 ist ersichtlich, dass alle sechs Werkstückauflagen 12 gleich ausgebildet sind, wobei deren Spitzen 20 folglich alle in der Bearbeitungsebene enden und das abzustützende Werkstück tragen.

Bei den bisherigen Laser-Bearbeitungstischen verschmutzten diese Werkstückauflagen 12 bedingt durch den Laser und die beim Bearbeiten entstehenden Abfälle stark. Dies wird bei dem hier beschriebenen Laser-Bearbeitungstisch 10 vermieden, indem jede Werkstückauflage 12 aus der in Figur 1a gezeigten Abstützposition in eine Schutzposition bewegt werden kann, wie nachfolgend beschrieben werden wird.

Jeder Werkstückauflage 12 ist ein Abdeckblech 22 zugeordnet, das sich ebenfalls zwischen den beiden Seitenhalterungen 16, 18 über die gesamte Länge der zugeordneten Werkstückauflage 12 erstreckt. Das Abdeckblech 22 ist fest mit den Seitenhalterungen 16, 18 verbunden, wobei jedoch ein Auswechseln des Abdeckblechs 22 jederzeit möglich ist.

Die in einem Laser-Bearbeitungstisch 10 vorgesehenen Abdeckbleche 22 sind alle gleich ausgebildet und jeweils in dichtem Abstand zu der zugeordneten Werkstückauflage angeordnet. Wie sich aus Figur 1a ergibt, liegt eine obere Kante jedes Abdeckblechs 22 unterhalb (in Y-Richtung gesehen) der durch die Spitzen der Werkstückauflagen 12 gebildeten Bearbeitüngsebene. Der Abstand kann wenige Millimeter bis einige Zentimeter betragen.

Die Abdeckbleche 22 sind üblicherweise aus einem Material gefertigt, an dem die beim Bearbeiten eines Werkstücks entstehenden heißen Abfälle nicht bzw. nur sehr schlecht anhaften.

Figuren 1a und 1b lassen noch erkennen, dass an den beiden Seitenhalterungen 16, 18 Aktuatoren 30 vorgesehen sind, die eine Bewegung der Werkstückauflagen 12 in Y-Richtung nach unten ermöglichen.

Da in der vorliegenden Ausführungsform bevorzugt jede einzelne Werkstückauflage 12 einzeln, das heißt unabhängig von den anderen Werkstückauflagen, bewegbar ist, sind für jede Werkstückauflage jeweils zwei Aktuatoren an den beiden Längsenden vorgesehen. Bei der vorliegenden Form dass Beispiels sind folglich jeweils sechs Aktuatoren 30 an den beiden Seitenhalterungen 16, 18 angebracht.

Bei den Aktuatoren 30 handelt es sich bevorzugt um pneumatische Bauelemente, die eine Transversalbewegung über einen Kolben gesteuert ausführen können.

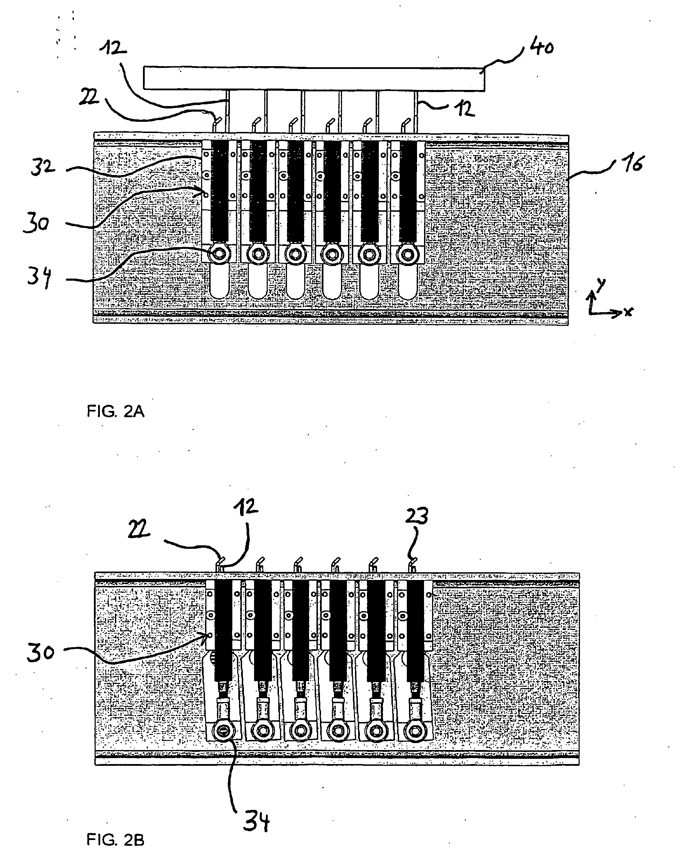

In Figuren 2a, b ist eine Seitenansicht des Laser-Bearbeitungstisches 10 gemäß der Erfindung gezeigt.

Deutlich zu erkennen sind hierbei die insgesamt sechs Aktuatoren 30 sowie die sechs Werkstückauflagen 12 und die jeweils zugeordneten Abdeckbleche 22. Zur Information ist noch ein Werkstück 40 dargestellt, das in der Bearbeitungsebene von den sechs Werkstückauflagen 12 gehalten wird.

Jeder der Aktuatoren 30 besitzt ein Gehäuse 32, das fest mit der Seitenhalterung 16 verbunden ist. Innerhalb des Gehäuses 32 ist ein Kolben geführt, dessen Ende aus dem Gehäuse herausragt und in Figur 2a mit dem Bezugszeichen 34 gekennzeichnet ist. Dieses Kolbenende 34 ist mit der zugeordneten Werkstückauflage 12 mechanisch gekoppelt, so dass eine Bewegung des Kolbenendes 34 in Y-Richtung zu einer entsprechenden Bewegung der Werkstückauflage 12 führt.

In Figur 2b ist der Laser-Bearbeitungstisch 10 in einem Zustand gezeigt, bei dem die Werkstückauflagen 12 nach unten in eine Schutzposition gefahren sind, wobei gut zu erkennen ist, dass die Kolbenenden 34 entsprechend nach unten verlagert sind. Gemäß der Erfindung weigen die Abdeckbleche 22 einen schräg zur Bearbeitungsebene verlaufenden Endabschnitt 23 auf, der - aus der Sicht des Lasers - wie ein Schutzdach wirkt. Unter diesen Endabschnitt 23 wird die jeweilige Werkstückauflage 12 am Ende der transversalen Bewegung in Y-Richtung geschwenkt.

Obgleich in Figur 2b alle sechs Werkstückauflagen 12 in ihrer Schutzposition unter den Endabschnitten 23 liegen, ist hier anzumerken, dass im normalen Betrieb üblicherweise immer nur eine Werkstückauflage 12 in der Schutzposition liegt. Alle anderen Werkstückauflagen 12 sind in der in Figur 2a gezeigten Abstützposition, um damit zu gewährleisten, dass das Werkstück 40 sicher abgestützt wird.

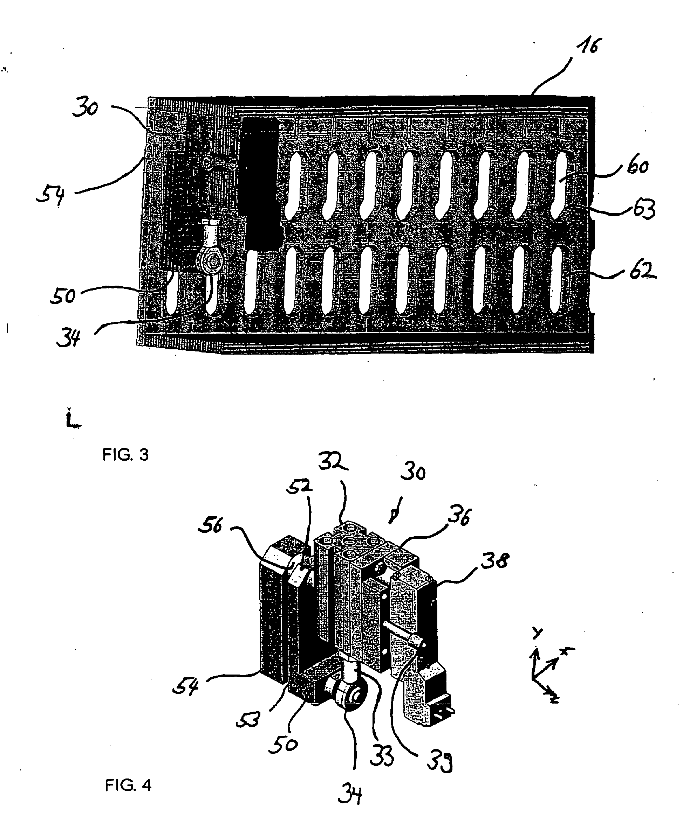

In Figur 4 ist ein einzelner Aktuator 30 nochmals in perspektivischer Darstellung gezeigt. Wie bereits erwähnt besitzt der Aktuator ein Gehäuse 32, in dem ein Kolben 33 geführt ist, dessen Ende 34 aus dem Gehäuse herausragt. Der Kolben 33 kann pneumatisch in Y-Richtung bewegt werden, wobei zur Steuerung der Druckluft ein Ventil 36 vorgesehen ist, das über eine elektrische Ansteuerung 38 gesteuert werden kann. Die Zuführung der Druckluft erfolgt beispielsweise über einen Druckluftanschluss 39.

Am Kolbenende 34 ist ein erster Führungsblock 50 angebracht, derart, dass er gegenüber dem Kolbenende 34 und dem Gehäuse 32 um die Z-Achse schwenkbar gehalten ist. Damit wird gewährleistet, dass das obere Ende 52 des ersten Führungsblocks in X-Richtung schwenken kann.

Mit dem ersten Führungsblock 50 ist ein zweiter Führungsblock 54 am oberen Ende 52 und am unteren Ende 53 verbunden. Ein Verbindungselement 56 ist in Figur 4 zu erkennen. Das andere Verbindungselement 56 ist gleich ausgebildet und liegt im Bereich des unteren Endes 53. Beide Verbindungselemente sind kreisrund ausgebildet, beispielsweise in Form von Kunststoffbuchsen, die gute Gleitfähigkeit auf Metall bei hoher Verschleißfestigkeit besitzen.

Die beiden Verbindungselemente 56 sorgen neben der Verbindung dafür, dass die Führungsblöcke 50, 54 beabstandet zueinander liegen. An dem zweiten Führungsblock 54 ist schließlich die zugeordnete Werkstückauflage 12 angebracht.

Wie bereits zuvor erwähnt, ist das Gehäuse 32 des Aktuators 30 fest an der jeweiligen Seitenhalterung 16 bzw. 18 angebracht, was in Figur 3 nochmals dargestellt ist. Die Seitenhalterung 16 besitzt eine Vielzahl von Langlöchern 60, 62, wobei jeweils einem Aktuator zwei Langlöcher 60, 62 zugeordnet sind. Aus Figur 3 ist gut zu erkennen, dass die Langlöcher 60, 62 jeweils in Y-Richtung verlaufen und zueinander ausgerichtet sind. Im Gegensatz zu den unteren Langlöchern 62 besitzen die oberen Langlöcher 60 jedoch einen unteren Abschnitt 63, der schräg zur Y-Achse nach links unten verläuft.

Die Langlöcher 60, 62 dienen jeweils als eine Art Kulissenführung für die beiden Führungsblöcke 50, 54. Hierzu ist das obere Verbindungselement 56 im oberen Langloch 60 geführt und das untere Verbindungselement 56 im unteren Langloch 62. Der zuvor erwähnte Abstand zwischen den beiden Führungsblöcken 50, 54 entspricht der Wanddicke der Seitenhalterung 16.

In Figur 3 ist ein Aktuator 30 mit dem in den Langlöchern 60, 62 geführten Führungsblock gezeigt.

Bei einer Bewegung des Kolbens 33 folgen die Verbindungselemente 56 dem Verlauf der Langlöcher 60, 62. Das heißt, dass das untere Verbindungselement 56 eine gerade Strecke durchläuft, während das obere Verbindungselement 56 nach einem geraden Abschnitt in den schräg verlaufenden 63 gelangt. Da der erste Führungsblock 50 schwenkbar am Kolben 33 angebracht ist, kann das obere Ende 52 des ersten und des zweiten Führungsblocks 50, 54 dem Verlauf des oberen Langlochs 60 folgen und damit die angebrachte Werkstückauflage 12 nach links (bezüglich der Figuren 2, 3) verschwenken. Diese Bewegung führt somit dazu, dass die entsprechende Werkstückauflage 12 unter den Endabschnitt 23 des Abdeckblechs 22 gelangt.

Der gleiche Aufbau mit Langlöchern 60, 62 und Aktuatoren 30 findet sich auf der gegenüberliegenden Seitenhalterung 18, so dass darauf nicht nochmals eingegangen werden muss.

Dem Laser-Bearbeitungstisch 10 ist eine Steuerung zugeordnet, die mit den Ansteuerungen 38 der Aktuatoren 30 verbunden ist. Darüber hinaus erhält diese Steuerung Positionsinformationen des Lasers, so dass die Steuerung in der Lage ist, abhängig von der Laserposition die entsprechende Werkstückauflage 12 nach unten die Schutzposition zu bewegen. Bevorzugt wird nur jene Werkstückauflage 12 nach unten bewegt, die im unmittelbaren Bereich des Lasers liegt. Selbstverständlich könnten auch weitere benachbarte Werkstückauflagen gleichzeitig mit nach unten bewegt werden, beispielsweise dann, wenn die Bearbeitung sehr schnell erfolgt.

Gemäß der Erfindung, in der Schutzposition wird das obere Ende der Werkstückauflage 12 wirkungsvoll durch den Endabschnitt 23 geschützt, einerseits gegenüber herabfallenden Abfällen und andererseits gegenüber direkter Laserstrahleinwirkung. Damit lässt sich die Lebensdauer der Werkstückauflagen 12 deutlich erhöhen. Die Auswechselinterwalle lassen sich demnach wesentlich erhöhen, wobei es lediglich von Zeit zu Zeit erforderlich ist, die Abdeckbleche zu reinigen oder ggf. auszutauschen. Da sie im Gegensatz zu den Werkstückauflagen eine sehr glatte Oberfläche besitzen, können sie sehr viel einfacher gereinigt werden, so dass die Austauschinterwalle ebenfalls sehr groß sind.

## Patentansprüche

1. Laser-Bearbeitungstisch (10) zur Abstützung eines per Laser zu bearbeitenden, vorzugsweise plattenförmigen Werkstücks (40), mit mehreren vorzugsweise länglichen Werkstückauflagen (12), die beabstandet zueinander angeordnet sind und in ihrer Abstützposition das Werkstück (40) in einer Bearbeitungsebene abstützen, wobei die Werkstückauflagen (12) jeweils aus der Abstützposition in eine Schutzposition beabstandet von der Bearbeitungsebene bewegbar gehalten sind, **dadurch gekennzeichnet, dass** jeder Werkstückauflage (12) ein Abdeckmittel (22) zugeordnet ist, das einen Abschnitt (23) aufweist, der schräg oder parallel zur Bearbeitungsebene verläuft, wobei das Abdeckmittel (22) mit dem schräg oder parallel zur Bearbeitungsebene verlaufenden Abschnitt (23) ausgebildet ist, die Werkstückauflage (12) in ihrer Schutzposition gegenüber dem Laser zu schützen.

2. Laser-Bearbeitungstisch (10) nach Anspruch 1, **dadurch gekennzeichnet, dass** die Werkstückauflagen (12) im wesentlichen senkrecht zur Bearbeitungsebene bewegbar gehalten sind.

3. Laser-Bearbeitungstisch (10) nach Anspruch 1, **dadurch gekennzeichnet, dass** jede Werkstückauflage (12) derart bewegbar gehalten ist, dass sie in der Schutzposition unter dem Schutzabschnitt (23) des Abdeckmittels (22) liegt.

4. Laser-Bearbeitungstisch (10) nach einem der vorhergehenden Ansprüche, **dadurch gekennzeichnet, dass** jeder Werkstückauflage (12) zumindest ein Aktuator (30) zugeordnet ist, der die Werkstückauflage in die Schutzposition unter dem Schutzabschnitt (23) des Abdeckmittels (22) und zurück in die Abstützposition bringt.

5. Laser-Bearbeitungstisch (10) nach Anspruch 4, **dadurch gekennzeichnet, dass** jeder Werkstückauflage (12) an jedem Längsende (16, 18) jeweils ein Aktuator (30) zugeordnet ist.

6. Laser-Bearbeitungstisch (10) nach Anspruch 4 oder 5, **dadurch gekennzeichnet, dass** der Aktuator (30) einen pneumatisch angetriebenen Kolben (33) umfasst und über ein elektrisch ansteuerbares Ventil (36) steuerbar ist.

7. Laser-Bearbeitungstisch (10) nach einem der vorhergehenden Ansprüche 5 bis 6, **dadurch gekennzeichnet, dass** jeder Werkstückauflage (12) an jedem Längsende (16, 18) eine Kulissenführung (60, 62) zugeordnet ist, in der die jeweilige Werkstückauflage geführt ist und deren Bewegungsbahn bestimmt.

8. Laser-Bearbeitungstisch (10) nach Anspruch 7, **dadurch gekennzeichnet, dass** die Kulissenführung (60, 62) einen ersten Führungsabschnitt, der im wesentlichen senkrecht zur Bearbeitungsebene verläuft, und einen zweiten Führungsabschnitt (63) aufweist, der quer zur Bearbeitungsebene verläuft, um die Werkstückauflage (12) in die Schutzposition zu schwenken.

9. Laser-Bearbeitungstisch (10) nach einem der vorhergehenden Ansprüche in kombination mit einem Laser, **dadurch gekennzeichnet, dass** eine Steuerung vorgesehen ist, die die Position des Lasers erfasst und abhängig davon die im Bereich des Lasers liegende Werkstückauflage in die Schutzposition bewegt.

10. Laser-Bearbeitungstisch (10) nach Anspruch 9, **dadurch gekennzeichnet, dass** die Steuerung die im Bereich des Lasers liegende Werkstückauflage nicht bewegt, wenn der Laser positioniert wird.

11. Laser-Bearbeitungstisch (10) nach einem der vorhergehenden Ansprüche, **dadurch gekennzeichnet, dass** die Werkstückauflage (12) als Rechenleiste ausgebildet ist.

12. Laser-Bearbeitungstisch (10) nach Anspruch 1, **dadurch gekennzeichnet, dass das** Abdeckmittel (22) als Schutzblech ausgebildet ist.

## Claims

1. Laser machining bench (10) for supporting a preferably plate-shaped workpiece (40) to be machined by laser, having a plurality of preferably elongate workpiece rests (12) which are arranged spaced apart from one another, and in their supporting position support the workpiece (40) in a machining plane, the workpiece rests (12) in each case being held movably out of the supporting position into a protective position spaced apart from the machining plane, **characterized in that** each workpiece rest (12) is assigned a covering means (22) which has a portion (23) which runs obliquely or parallel with respect to the machining plane, the covering means (22) being designed, with the portion (23) running obliquely or parallel with respect to the machining plane, to protect the workpiece rest (12) in its protective position with respect to the laser.

2. Laser machining bench (10) according to Claim 1, **characterized in that** the workpiece rests (12) are held so as to be moveable essentially perpendicularly with respect to the machining plane.

3. Laser machining bench (10) according to Claim 1, **characterized in that** each workpiece rest (12) is held moveably in such a way that, in the protective position, it lies below the protective portion (23) of the covering means (22).

4. Laser machining bench (10) according to one of the preceding claims, **characterized in that** each workpiece rest (12) is assigned at least one actuator (30) which brings the workpiece rest into the protective position below the protective portion (23) of the covering means (22) and back into the supporting position.

5. Laser machining bench (10) according to Claim 4, **characterized in that** each workpiece rest (12) is assigned in each case an actuator (30) at each longitudinal end (16, 18).

6. Laser machining bench (10) according to Claim 4 or 5, **characterized in that** the actuator (30) comprises a pneumatically driven piston (33) and is controllable via an electrically activatable valve (36).

7. Laser machining bench (10) according to one of the preceding Claims 5 and 6, **characterized in that** each workpiece rest (12) is assigned at each longitudinal end (16, 18) a slotted guide (60, 62) in which the respective workpiece rest is guided and its path of movement determined.

8. Laser machining bench (10) according to Claim 7, **characterized in that** the slotted guide (60, 62) has a first guide portion, which runs essentially perpendicularly with respect to the machining plane, and a second guide portion (63), which runs transversely with respect to the machining plane, in order to pivot the workpiece rest (12) into the protective position.

9. Laser machining bench (10) according to one of the preceding claims, in combination with a bearing, **characterized in that** a control is provided which detects the position of the laser and as a function of this moves the workpiece rest lying in the region of the laser into the protective position.

10. Laser machining bench (10) according to Claim 9, **characterized in that** the control does not move the workpiece rest lying in the region of the laser when the laser is positioned.

11. Laser machining bench (10) according to one of the preceding claims, **characterized in that** the workpiece rest (12) is designed as a strip rake.

12. Laser machining bench (10) according to Claim 1, **characterized in that** the covering means (22) is designed as a protective metal sheet.

## Revendications

1. Table d'usinage laser (10) pour le support d'une pièce (40) à usiner, de préférence en forme de plaque, avec plusieurs appuis de pièce (12) de préférence oblongs qui sont disposés à intervalle l'un de l'autre et qui dans leur position d'appui supportent la pièce (40) sur un plan d'usinage, lesdits appuis de pièce (12) étant déplaçables hors de la position d'appui vers une position de protection à intervalle du plan d'usinage, **caractérisée en ce qu'**à chaque appui de pièce (12) correspond un moyen de couverture (22) comportant une partie (23) s'étendant obliquement ou parallèlement au plan d'usinage, ledit moyen de couverture (22) étant, avec la partie (23) s'étendant obliquement ou parallèlement au plan d'usinage, réalisé de manière à protéger l'appui de pièce (12) par rapport au laser, en position de protection de celui-ci.

2. Table d'usinage laser (10) selon la revendication 1, **caractérisée en ce que** les appuis de pièce (12) sont déplaçables sensiblement perpendiculairement au plan d'usinage.

3. Table d'usinage laser (10) selon la revendication 1, **caractérisée en ce que** chaque appui de pièce (12) est déplaçable de manière à être maintenu en position de protection en-dessous de la partie protectrice (23) du moyen de couverture (22).

4. Table d'usinage laser (10) selon l'une des revendications précédentes, **caractérisée en ce qu'**à chaque appui de pièce (12) correspond au moins un actionneur (30) qui déplace l'appui de pièce vers la position de protection en-dessous de la partie protectrice (23) du moyen de couverture (22) et le ramène en position d'appui.

5. Table d'usinage laser (10) selon la revendication 4, **caractérisée en ce qu'**à chaque appui de pièce (12) correspond au moins un actionneur (30) à chaque extrémité longitudinale (16, 18).

6. Table d'usinage laser (10) selon la revendication 4 ou la revendication 5, **caractérisée en ce que** l'actionneur (30) comprend un piston (33) entraîné pneumatiquement et est commandable par une soupape (36) à actionnement électrique.

7. Table d'usinage laser (10) selon l'une des revendications 5 et 6, **caractérisée en ce qu'**à chaque appui de pièce (12) correspond un guidage à coulisse (60, 62) à chaque extrémité longitudinale (16, 18), dans lequel coulisse l'appui de pièce (12) respectif et qui définit la course de déplacement de celui-ci.

8. Table d'usinage laser (10) selon la revendication 7, **caractérisée en ce que** le guidage à coulisse (60, 62) comporte une première partie de guidage qui s'étend sensiblement perpendiculairement au plan d'usinage, et une deuxième partie de guidage (63) qui s'étend transversalement au plan d'usinage, pour pivoter l'appui de pièce (12) en position de protection.

9. Table d'usinage laser (10) selon l'une des revendications précédentes en combinaison avec un laser, **caractérisée en ce qu'**il est prévu une commande qui saisit la position du laser et déplace en fonction de celle-ci l'appui de pièce situé au niveau du laser vers la position de protection.

10. Table d'usinage laser (10) selon la revendication 9, **caractérisée en ce que** la commande ne déplace pas l'appui de pièce situé au niveau du laser quand le laser est positionné.

11. Table d'usinage laser (10) selon l'une des revendications précédentes, **caractérisée en ce que** l'appui de pièce (12) est réalisé sous la forme d'un peigne.

12. Table d'usinage laser (10) selon la revendication 1, **caractérisée en ce que** le moyen de couverture (22) est réalisé sous forme de tôle de protection.
